# EUROPEAN PATENT SPECIFICATION

(11) **EP 1 393 523 B1**
(45) Date of publication and mention of the grant of the patent: **10.05.2006**
(21) Application number: 02733022.4
(22) Date of filing: 15.05.2002
(51) Int. Cl.: H04L 29/06

(54) **Method and chip card for management of cookie type data files**
Verfahren und Chipkarte zur Verwaltung von Cookie-Dateien
Procédure et carte à puce destinées à la gestion de fichiers de données de type cookie

(30) Priority: 17.05.2001 FR 0106501
(43) Date of publication of application: 03.03.2004
(73) Proprietor: Axalto S.A., 92120 Montrouge (FR)
(72) Inventor: URIEN, Pascal, F-78450 Villepreux (FR); SIEGELIN, Christoph, F-75015 Paris (FR)
(74) Representative: Renault, Patricia Marie Jacqueline
(86) International application number: PCT/IB2002/001804
(87) International publication number: WO 2002/093871

(56) References cited:
- WO-A-00/70838
- WO-A-98/57474
- WO-A-99/64967
- KRISTORL D ET AL: "RFC 2965: HTTP State Management Mechanism" IETF NETWORK WORKING GROUP, [Online] - October 2000 (2000-10) pages 1-26, XP002189252 Retrieved from the Internet: <URL:ftp://ftp.isi.edu/in-notes/rfc2965.tx t> [retrieved on 2002-02-05]

## Description

The invention concerns a procedure for management of "cookie" type data files in a silicon chip on-board system.

It applies more particularly to chip cards.

The invention also concerns a silicon chip on-board system for implementation of the procedure, with the on-board system connected to an Internet type network.

In connection with the invention, the term "Internet network" includes, in addition to the Internet network itself, private business or similar networks of the Intranet type, and networks extending the latter to the exterior of the "Extranet" type, and generally any network on which data exchanges are performed in accordance with Internet type protocols, including HTTP (HyperText Transport Protocol) in particular. Any such network will be referred to generically below as an "Internet network".

The preferred application for the invention, namely a chip card-based application system, is taken as the context for the following description.

A system of this type generally comprises the following components:
- chip card;
- host system (dedicated terminal, microcomputer, etc.);
- communication network, namely Internet itself for the preferred application, and
- one or more application servers connected to the network.

The host system is generally equipped with a software unit referred to as a "browser". The browser is used in particular to transmit queries to a given server, for example for connection to a web site, obtain downloading of text, graphic or multimedia files, or any other operation complying with the transmission protocol used. A web page can be located by a URL (Uniform Resource Locator) address.

For this type of operation, the chip card host system acts as the "client" via the browser. However, it can also act as a "server".

The procedure according to the invention is particularly concerned with the utilisation of "cookies", and it is appropriate to give a brief recapitulation of the principal characteristics of this type of IT files, and their importance in the context of Internet technology.

Two consecutive connections from the same client, for example the above-mentioned host system, are independent as far as the HTTP protocol is concerned. In other words they are seen as two totally independent connections. It is easy to see that this mode of operation lacks flexibility, as the session context is not preserved. This is particularly troublesome in connection with applications which are more complex than simple interrogation of a database for example.

Consequently, a number of methods for circumventing this problem have been proposed in the state of the art. These include:
1. Utilisation of hidden fields in the forms. However, this method is cumbersome to manage in the absence of a dedicated metalanguage.
2. Utilisation of specific files in the server storing the states. However, these files cannot be stored indefinitely, and in the event of subsequent reconnection by means of a bookmark access the query cannot be met; or
3. Utilisation of "cookies".

With the latter method, an HTTP server sends IT files referred to as "cookies" in the headers of data packets transmitted. It should be remembered that the HTTP protocol is characterised in particular by the transmission of data packets. These cookies contain various descriptors accompanying the URL addresses mentioned above. The cookies are generally recorded and stored in a mass memory such as a hard disk, incorporated in the host system, for utilisation on the next connection.

In more precise terms, cookies take the form of text files (.txt extension), recorded in a specific directory on the hard disk, the name of which depends on the browser used. For example, for Microsoft's "Internet Explorer" (registered trademark), the name of the directory is "Cookies". These files can be read using a simple text editor.

A conventional HTTP server normally includes a CGI (Common Gateway Interface) mechanism.

A CGI is a specification for the implementation of applications written for operating systems such as UNIX (registered trademark), DOS or Windows (registered trademark) from a web server. For example, the specification for the UNIX operating system is CGI 1.1, and for the Windows 95 operating system the specification is CGI 1.3.

Again as an example, a conventional HTTP query of the type:
"*http:*//*www.host.com*/*cgi-bin*/*xxx.cgi*"*,*
in which *"host"* refers to a host server system (generally remote), is interpreted by an HTTP server as execution of a command script of the CGI type with the name "xxx", and present in a specific directory generally designated "cgi-bin". A script is a sequence of server system operating system instructions, the final result of which is sent to the web browser which sent the query referred to above. Various languages can be used to write this script, including PERL (registered trademark).

The cookies stored in the client system can be used by a CGI of the type described above, or by a JavaScript (registered trademark) type program, using certain of its properties.

A CGI program uses cookies by adding a specific "*Set-Cookie:*" command to the information contained in the HTTP header of the data packet transmitted. The syntax of this command is as follows (as defined by specification RFC 2109):
*NAME=value* [*;expires=date*] [*;domain=domain_name*] [*;path=path*] [*;secure*]

The various attributes are used as follows, bearing in mind that attributes indicated in square brackets are optional:
- "*NAME*" is a given variable and *"value"* is its value. This is the only mandatory attribute;
- "*expires*" is a variable, and "date" is the validity or expiry data of the cookie. The cookie is no longer stored on the hard disk after this date. If no date is given, the cookie expires at the end of the session. Date format is "*dow*, *dd-mm-yy HH*:*MM*:*SS* GMT", where "*dow*" is the day of the week, "*dd*" is the day of the month, "*mm*" the month, "*yy*" the year, "*HH*" is the GMT hour value, and "*MM*" and "SS" the corresponding minute and second values.;
- *"domain"* is a variable giving the name of the validity domain ("*domain_name*") of a cookie, or more precisely all domains which terminate with this name (for example *"xxx.net",* "*yyy.com*", etc.). The default domain name is the name of the server which generated the cookie;
- *"path"* is a variable defining the path associated with a cookie. For example, "path = /" indicates that the cookie is valid for all queries sent to the server;
- "*secure*" is a parameter-less variable which indicates whether the cookie is transmitted to the server in the secure mode. If this variable exists, the transport protocol used is of the HTTPS type secured by the SSL (Secure Socket Layer) protocol.

When a cookie is sent by a server, the browser interrogates its list of cookies stored on the hard disk, and compares the list of corresponding domains with that of the domain of the URL interrogated.

When a browser sends a query associated with a URL, the domain of which (server name and path) is associated with one or more cookies, a line is added to the query. This line includes another cookie command, indicating the list of cookies available on the client terminal (stored on hard disk).

For example, if two cookies correspond to the criteria indicated: *"NAME1=XXX"* and "*NAME2=YYY*", where *"NAME1"* and *"NAME2"* are variables giving the names of the two cookies, and *"XXX"* and "*YYY*" are their respective values, the additional header line can have the following configuration:
*"cookie: NAME1= XXX; NAME2=YYY"*

Existing browsers can regularly store up to 300 cookies, and up to 20 cookies per domain.

Exchanges between the browser and remote server associated with the transmission of cookies are consequently performed in two main phases.

A browser sends a query to an HTTP server and receives the above-mentioned *"Set-Cookie:*" command, with all or some of the variables and parameters described ("*NAME*"*, "expires",* etc.), in the HTTP header for the data packets transmitted. At least the "*NAME*" variable and its value are carried by the cookies transmitted. This command generates a record on the hard disk in the form of a "*.txt*" file.

When the client sends a query (via the browser) for access to the same remote server with the path, it sends the command "*Cookie:*" to the server, accompanied by all or some of the variables and parameters previously recorded (at least the "*NAME*" variable and its value).

For subsequent exchanges, the remote server can transmit additional cookies, defining the client profile, namely the information characterising the client, in more detail.

It is easy to understand that the utilisation of cookies, in particular for e-commerce applications, is of particular importance and that this procedure has been generalised.

Cookies can also be used for other purposes, for example in connection with secure sessions. The fact that it is possible to identify a user (*"NAME"* variable mentioned above and its parameters), and impose a maximum period of validity (*"expires"* variable mentioned above and its parameters) for this purpose. Where the predefined validity date and/or (more generally) time interval is/are exceeded, it is necessary to reinitiate a session, for example for supplying a new "identifier-password" pair, for reconnection to the secure server. A secure session (*"secure"* variable mentioned above) can also be imposed.

The possibility of on-line account interrogation offered by certain banks can be quoted as a non-restrictive example.

While the utilisation of cookies if of unquestionable interest, it is equally unquestionable that this utilisation also has a number of drawbacks.

The first drawback is due to the fact that the cookie identifies a browser (the browser being associated with a specific directory of a cookie storage hard disk) rather than a particular user. Consequently, a change of browser, either because the user switches workstations, or because the user employs different browsers on the same workstation, causes loss of relevant information associated with the cookie. This is inconvenient from the point of view of the user (who wishes to be recognised by the HTTP server independently from the browser), and equally so from the point of view of the service provider (as the same user browses under different identities, which compromises the validity of statistical data collected, for example). Furthermore, if a number of users share a browser (as is generally the case with a family computer for example), data associated with a particular user, whether statistical or not, are also compromised.

The second drawback is directly related to security problems in the broad sense of the term, namely confidentiality, integrity and availability. In the current state of the art cookies are managed by the browser. However, the data associated with a cookie are highly sensitive, in particular in terms of protection of the privacy of the user, but also in terms of the value of their "marketing" type information. The majority of existing browser programs execute a simple check on the distribution of cookies (as defined by the RFC 2109 specifications). However, this mechanism cannot be modified, and cannot be checked by the owner of the cookie (the associated web service). Consequently, any commitment in regard to the user concerning the utilisation of cookies becomes hazardous. Furthermore, cookies stored on hard disk can be manipulated very easily, both by the user and any third party having access to the computer, even in the case of an editable text file.

Again in the security domain, a cookie used for fraudulent or malicious purposes can carry data initiating operations injurious to the client terminal, in most cases unknown to its user.

Questionable commercial practices have also been detected recently, in particular under the designation "web bug". The general mechanism is described below.

When a user (surfer) visits a given web site page, the user can click on predetermined zones, for example an image or graphic zone on the page, whether deliberately or not. According to the above-mentioned web bug process, this action can initiate a search for an image on another site. The "sensitive" zone on which the surfer has clicked may be visible or not. The size of this zone can be of the order of no more than one or a few pixels. It should be noted that the surfer has so far given no authorisation for connection to a second site, and this action can also remain totally transparent. It can also be the case that the same surfer has already visited the second site, and that the cookie associated with this earlier visit already exists. Information available by reason of this cookie can then be transmitted, again unknown to the surfer visiting the first site, on transmission of the selected image by the first site. It is merely necessary for cooperation agreements between the two sites to exist. Even though such agreements may contravene the law in certain countries, site hosts can be located anywhere in the world, and it is difficult in practice to enforce compliance with specific legislation.

Some Internet access suppliers or hosts have joined confidentiality compliance charters. A example is the "TRUSTe" program (registered trademark: www.truste.org web site). However, compliance with these confidentiality charters is voluntary, and it is difficult to check actual compliance.

Two requirements consequently emerge from the foregoing:
1. The first requirement is for close correlation between a given user and a quantity of information characterising the user, generally grouped under the term "profile associated with this user" (miscellaneous statistical data, habits, etc.). This aspect essentially represents the interests of the server, in particular in the context of commercial applications (taken in the broadest sense). It can also be in the interest of a user transmitting queries to the server, for example where the user orders certain products on a regular basis. However, it has been demonstrated that state of the art procedures and devices, based on utilisation of browsers and the storage of cookies on a hard disks or equivalent, cannot meet this first requirement satisfactorily.
2. The second requirement is for optimum control of the utilisation of cookies, namely avoidance, as far as possible, of their fraudulent or at least undesirable utilisation. Once again, state of the art procedures and devices cannot meet this requirement, at least not satisfactorily. The prohibition of acceptance of cookies by the browser, and their recording on hard disk could be considered. This possibility is generally offered by modern browsers. However, the utilisation of cookies is so widespread that it is practically impossible to browse on the web if such measures are adopted. This is the case in particular for secure banking type applications as mentioned above, which usually require the acceptance of cookies as an alternative to reidentification for access to each function supplied by the service.

The document WO 98/57474 discloses a method for using a smart card that stores an Internet provider's address, an IP address and the card user's other personal Internet data. This document suggests using the browser of a terminal to transmit cookies in a register. Therefore, this document meets the first requirement mentioned above. While the chip card can be separated from the browser, the browser must be each time "personalized". Such personalization is not automatic and requires a communication between the browser and the chip card. This kind of teaching does not permit to place the chip card in direct communication with a remote server via the Internet network so as to manage itself the storing of received cookies in the chip card.

The invention is designed to meet the second requirement mentioned above, requirement which appears intrinsically paradoxical, while overcoming the drawbacks of the state of the art, certain of which are mentioned above.

According to characteristic of the procedure covered by the invention, cookies are managed not by the browser present in the chip card host system, but by the chip card itself, or in more general terms, in an on-board silicon chip system. In more precise terms, management is provided by electronic circuits incorporated in the chip card: digital data processing device (microcontroller or equivalent), memory, etc.

For this purpose, the procedure according to the invention takes advantage of the possibility of using a chip card as an Internet node. The chip card can then act as a HTTP client-server, or more precisely as an HTTP proxy. Measures of this type are described in French patent application FR 2 782 435 A1, published in the name of the applicant under the title "Procedure for communication between a user station and a network, in particular of the Internet type, and implementation architecture". Applying these measures, it is possible to communicate with the chip card using the standard HTTP protocol. These measures are recapitulated below.

The procedure according to the invention presents numerous advantages. These include:
- the cookie follows the user, as the chip card is intrinsically the property of the user who can keep it for its own use. This ensures better identification of the user (requirement for clear correlation mentioned above). This clear identification, primarily of interest to the service provider, can be considered as a disadvantage by the user in certain cases. However, the user is warned of this risk, which represents a deliberate choice for the user;
- where cookies are stored on the chip card, no trace (records) is left on the hard disk. Any such trace can represent a major drawback from the security point of view (confidentiality in particular, as sites visited can be identified), and also where the chip card host system is open to collective utilisation, or at least lacking in measures prohibiting unfiltered access;
- in the case of a "web bug" type process as mentioned above, it is possible to force the browser to refuse cookies, while leaving the choice of selective acceptance to the chip card alone. Furthermore, the chip card controls delivery of a cookie, this being impossible in practical terms with a browser. In more precise terms, cookie management (including selective transmission of cookies to certain HTTP servers in particular, anonymity option, etc.) can be performed by an applet stored on the chip card or in the on-board system. This provides greater flexibility, and makes it possible to solve the security problem mentioned above.

The purpose of the invention is to provide a procedure for management of cookie type data as defined by independent claim 1 and a chip card as defined by independent claim 8.

There are three main practical forms for the procedure according to the invention.

According to a first, preferred form, the chip card, or more generally the silicon chip on-board system, is used as a web client/server and proxy, in accordance with the description given in the above-mentioned French patent application. A "encapsulation" method is used. According to the practical form, the cookie or cookies are sent with the data packages transmitted. Again according to this practical form, which can be considered as the most complete, the cookies are managed by the silicon chip on-board system, and are also stored in this system. This practical form of the procedure according to the invention makes it possible to benefit from all the advantages described above.

According to a second practical form, a "redirection" procedure, known as such in Internet technology, is applied. Management of the cookies remains under the responsibility of the silicon chip on-board system. However, when the system receives a cookie, it issues a redirection order such that the cookie is sent to the host terminal where it is stored, for example on a hard disk. Likewise in the opposite direction, a query transmitted to the silicon chip on-board system is redirected to a remote server, and includes one or more cookies associated with the domain of this server, these cookies having been stored in the host terminal. Although management of the cookies is handled by the silicon chip on-board system, the degree of security obtained with this procedure is less as the cookies are stored in the terminal.

According to a third practical form, management of the cookies is under the responsibility of the browser, but the cookies are stored in the silicon chip on-board system, *a priori* in a special directory. When the browser sends a query to a remote server, the query transits via the silicon chip on-board system, and a test is run to detect the existence of one or more cookies corresponding to the domain of the server. If the test is positive, a supplementary line containing the cookie(s) is added to the query. This practical form offers a higher degree of security than the previous form, as no trace of the cookies is left in the silicon chip on-board system. Furthermore, the user is fully identified, as the user is *a priori* the same as the carrier of the silicon chip on-board system. The cookies themselves are consequently "mobile" also, as they are recorded in the silicon chip on-board system.

The invention is now described in more detail, referring to the attached diagrams, in which:
- Figure 1 illustrates an example of a chip card based application system in accordance with the state of the art, in schematic form;
- Figure 2 illustrates an example of a chip card based application system in accordance with the description given in French patent application FR 2 782 435 A1, in schematic form;
- Figure 3 illustrates an example of a chip card based architecture for implementation of the cookie management procedure in accordance with the first, or preferred practical form of the invention, in schematic form;
- Figure 4 illustrates an example of a chip card based architecture for implementation of the cookie management procedure in accordance with a second practical form of the invention, in schematic form; and
- Figure 5 illustrates an example of a chip card based architecture for implementation of the cookie management procedure according to a third practical form of the invention in schematic form.

In the following description, and in no way limiting its scope, reference will be made to the preferred application for the invention, namely the case of chip card based applications, unless otherwise indicated.

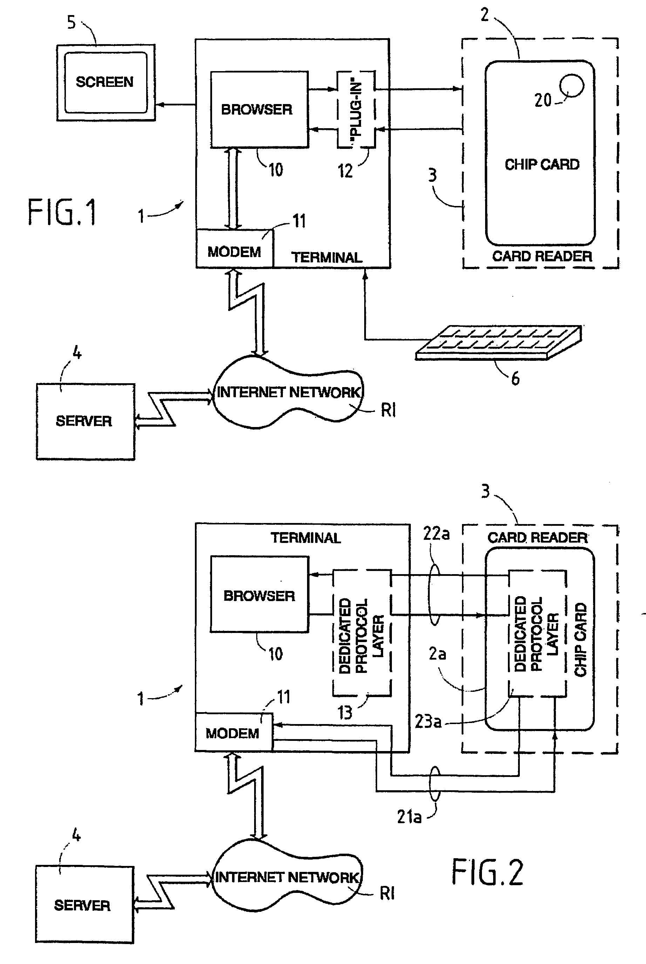

Figure 1 illustrates an example of dedicated state of the art architecture for this type of example in schematic form. Terminal 1, for example a PC, incorporates chip card reader 3. Chip card 2 incorporates integrated circuit 20, for which the I/O connections are flush with the surface of its support, providing for electric power supply and communication with terminal 1. The chip incorporates well known IT devices, including digital data, processing (microcontroller, microprocessor or equivalent) and memory devices in particular. Terminal 1 incorporates circuits 11 for access to data transmission network *RI,* for example a modem, for connection to the Internet network, directly or via an Internet service provider (ISP).

Terminal 1 naturally incorporates all circuits and other elements necessary for its correct operation (not shown to simplify the diagram), namely central processing unit (CPU), read/write memory (ROM), magnetic disk mass memory, disk and/or CD reader, etc.

Customarily, terminal 1 is also connected to conventional peripheries, whether integrated or not, such as display screen 5 and keyboard 6. Terminal 1 can be placed in communication with servers 4 connected to network *RI*, of which one only is shown in Figure 1. Access circuits 11 place terminal 1 in communication with servers 4 via a dedicated browser program. The browser provides for access to various applications distributed over network *RI*, generally in the client-server mode. Customarily, communications on the networks are established in accordance with protocols complying with standards involving a number of superimposed software layers. In the case of Internet type network *RI*, communications are established using protocols specific to this type of communication. The communication protocol is selected according to the application specifically targeted, namely web page interrogation (HTTP), file transfer (FTP), e-mail, forums or "news", etc.

It should be noted that chip card 3 cannot communicate directly with commercial browsers, unless the browser codes are modified. Conventional cards, which comply with clearly defined standards (ISO 7816-1 to 7816-4 in particular), have a hardware and software configuration which does not allow direct communication with the Internet network. In particular, they cannot receive or send data packets using any of the protocols used on this type of network. It is consequently necessary to provide an additional software tool, installed in terminal 1, generally in the form of a plug-in. This software tool, 12 in Figure 1, provides an interface function between browser 10 and card 2, or more precisely electronic circuits 20 on card 2.

So that chip card 2, or more precisely the electronic circuits 20 which it carries, can communicate directly with browser 10 and servers 4 via the Internet network and circuits 11, the applicant has proposed, in the above-mentioned French patent application No. FR 2 782 435 A1, a procedure for communication between a terminal and an Internet type network, using a chip card as a client/senrer. For further details, reference can profitably be made to the description and attached diagrams included in this patent application.

Nevertheless, a brief recapitulation of an example of system architecture (host terminal 1 and chip card 2a) providing for this advantageous form of operation referring to Figure 2, which also corresponds to Figure 2 in the above-mentioned patent application, is given below.

Items common to Figure 1 carry the same references, and will not be described again unless required. To simplify the diagram, the various peripherals connected to the terminal (screen 5 and keyboard 6 in Figure 1 for example) are not shown.

According to a first key characteristic of the procedure described in the patent application, all or part of the data flow between terminal 1 and network *RI* is shunted by the chip card. The data flow nevertheless continues to transit via network access circuits 11.

Access circuits 11 are connected to chip card 2a via a bidirectional transmission channel symbolised by two serial links 21 a. Likewise, chip card 2a is connected to terminal 1, and more precisely to browser 10, via a bidirectional transmission channel symbolised by two serial links 22a. In more precise terms, channels 21 a and 22a are separate and bidirectional from the logic point of view. Specific software layers 13 and 23a are used in particular to obtain two logic channels, analogous with channels 21 a and 22a, from a single physical link of the half-duplex type in the current state of the technology.

Chip card 2a is dedicated to obtain this type of operation. It is necessary to incorporate a specific communication protocol layer, represented by 23a in Figure 2.

A symmetrical specific protocol layer must be provided at the terminal 1 end, represented in schematic form under reference 13, forming the pendant of the specific layer integrated in chip card 2a. Layers 13 and 23a are provided in addition to the standard communication layers. The latter are well known to specialists in the domain, and it is unnecessary to describe them further here.

In more specific terms, layers 13 and 23a handle dialogue between chip card 2a and the host, namely terminal 1, and browser 10. These layers are used to exchange information between a user (not shown) of terminal 1 and chip card 2a, for example via roll-up menus in HTML format hypertext. They are also used to set up a suitable configuration for the transmission and/or reception of data packets. Specific communication software layers 13 and 23a include "intelligent agent" applets in particular, used principally for protocol conversion tasks. There are matched agents in the specific communication layers associated respectively with the terminal and chip card, so that sessions (bidirectional data exchanges) can be set up between these matched agents. A number of attributes are used to characterise intelligent agents. These include host, card, local, network, server, client, etc. according to their location (protocol layer 13 or 23a), and the function which they provide. These agents are also used to initiate network transactions.

With this arrangement, chip card 1 can operate in the HTTP client-server mode, and act as a proxy.

As a non-restrictive example, terminal 1 can address chip card 2a via a loop URL, normally of the type:
*"http:*//*127.0.0.1:8080"* (1) where *"127.0.0.1:8080"* is the IP (Internet protocol) address proper, and *"8080"* is the port number.

A typical session is:
*"HTTP ⇔ Client host local intelligent agent ⇔ specific layer 13 ⇔ specific layer 23a ⇔ server card local intelligent agent"*

The procedure according to the invention takes advantage of these characteristics. An architecture similar to that described in Figure 2 can be adopted.

A first, or preferred practical form of the procedure according to the invention is now described referring to Figure 23.

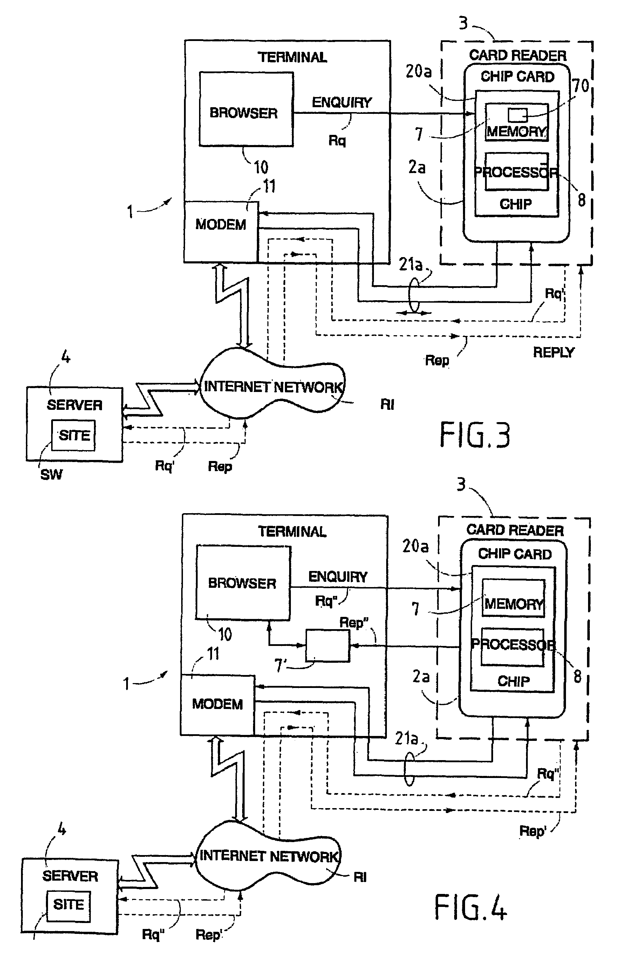

Identical elements carry the same references in Figure 3, and are not described again except where necessary.

In this practical form, cookies are managed and stored by chip card 2a, or more precisely by memory 7 incorporated in silicon chip 20a mounted on the card. This card also incorporates a digital data processing device, for example microprocessor 8, and other standard circuits, namely ROM or EPROM circuits for permanent or semi-permanent storage of programs and/or microinstructions, and the operating system particular to chip card 2a.

Conventionally, browser 10 sends query *Rq* to web site SW on remote server 4. In contrast, in accordance with one of the descriptions contained in the above-mentioned French patent application, query Rq is redirected to the chip card by a loop URL (see (1) above).

According to one characteristic of the variant of the procedure according to the invention described in Figure 3, memory 7 stores the cookies in a special zone which we will call cookie cache 70. From a logic point of view, this can be a special directory contained in memory 7.

The content of cache 70 is examined under the control of processor 8. If the cache contains one or more cookies associated with the web site address by query Rq (or more precisely with a particular domain), the cookie(s) will be added to query Rq before it is transmitted, under reference *Rq',* to server 4 via link 21 a, modem 11 and Internet network *RI.* The cookies are carried by query *Rq*', and consequently "encapsulated" in the data flow transmitted. In the contrary case, query Rq would have been transmitted without modification (no additions).

Customarily also, server 4 replies to received query *Rq',* whether the query contains cookies or not. In the first case, server 4 observes the presence of cookies, but does not know their exact provenance. This means that the cookies could just as well be stored in terminal 1 in accordance with the state of art. The server uses the cookie(s) received conventionally, according to the service requested or the functions attaching to the cookies (statistics, security, etc.). Reply *Rep* can involve transmission of an HTML page (site *SW* page), text or multimedia file, or any other IT file permitted by the Internet protocol used.

Again, customarily *per se,* server 4 can add one or more cookies to reply *Rep.* In the case of a first query, a "new cookie" can be concerned, for example indicating certain characteristics of the requester, or more precisely the owner of chip card 2a, in line with one of the characteristics of the procedure according to the invention. In the contrary case, server 4 can send supplementary cookies, or cookies intended to modify information associated with cookies previously transmitted, for example to clarify the profile of the requester.

According to one of the descriptions in the above-mentioned French patent application, the reply is transmitted to chip card 2a via Internet network *RI,* modem 11 and link 21 a. If reply *Rep* carries one or more cookies, these are stored in cache 70.

It will be easily understood that acceptance or transmission of cookies is performed under the sole responsibility of chip card 2a, which manages these operations in full. This arrangement makes it possible to obtain a high degree of security. Chip card 2a can therefore filter or even destroy cookies. Furthermore, as the cookies are stored in cache 70, they remain attached to chip card 2a, and consequently "physically follow" the owner of the card. In other words, the information attached to these cookies is associated with the owner of chip card 2a, and not with other user(s) of terminal 1. This association is finally anonymous as is the case in the state of the art, and this makes it possible to obtain good identification of the card owner. As terminal 1 does not store the cookies, no browsing trace is left in the terminal, ensuring satisfactory security and a high degree of confidentiality in particular.

It will therefore be noted that the procedure comprises two main steps:
a) following a reply, storage in the memory device (cache 70) of chip card 2a, of cookies received from one or more servers 4, each cookie being associated with a particular domain by the above-mentioned *"domain"* and *"path"* parameters, or at least with the server having sent the cookie if these parameters are not present in the cookie in question; and
b) selective transmission by the chip card to a given server, following a query transmitted by the browser and redirected to the chip card, simultaneously with transmission of this query by the chip card to the server, of cookies associated with a domain of this server or the actual server.

Step a) is performed, either in what can be qualified as a preliminary phase, when a cookie is transmitted to a chip card by a given server, simultaneously with a first query, or in one or more subsequent phases when the chip card transmits a new query to the same server.

A second practical form of the procedure according to the invention can now be described referring to Figure 4. Elements identical to the preceding figures, and Figure 3 in particular, carry the same references in Figure 4 and are not described again except where necessary.

According to this practical form, the cookies are managed by chip card 2a as in the previous case (Figure 3). However, the cookies are stored in terminal 1, or more precisely in memory resource 7', for example in a dedicated directory, similar per se to the state of the art. A query is sent by browser 10 as before. If there are cookies associated with the domain of server 4 addressed, or server 4 itself (if the "*domain*" and "*path*" parameters are absent), these cookies are added to the query, now referenced Rq". The query is looped to chip card 2a as before, and transmitted to server 4 (web site SW addressed) via link 21 a, modem 11 and Internet network *Rl.* Reply *Rep'* from server 4 is transmitted to chip card 2a via the reverse path. If the reply contains cookies, a "redirection" instruction of a basically conventional type, is used to send the data carried by reply *Rep*', referenced *Rep",* to terminal 1 so that the cookies are stored in memory 7'.

This second practical form has a lesser degree of security than the first form illustrated in Figure 3. The cookies remain under the entire control of chip card 2a, but are stored in terminal 1. Likewise, the correlation between the owner of chip card 2a and the information associated with the cookies stored in memory 7' of terminal 1 is not optimum. If chip card 2a is inserted in the card reader of another terminal, this information is lost. Likewise, if a chip card other than card 2a is inserted in card reader 3 of terminal 1 (Figure 4), the information stored in memory 7' does not concern this chip card and/or the owner of this card.

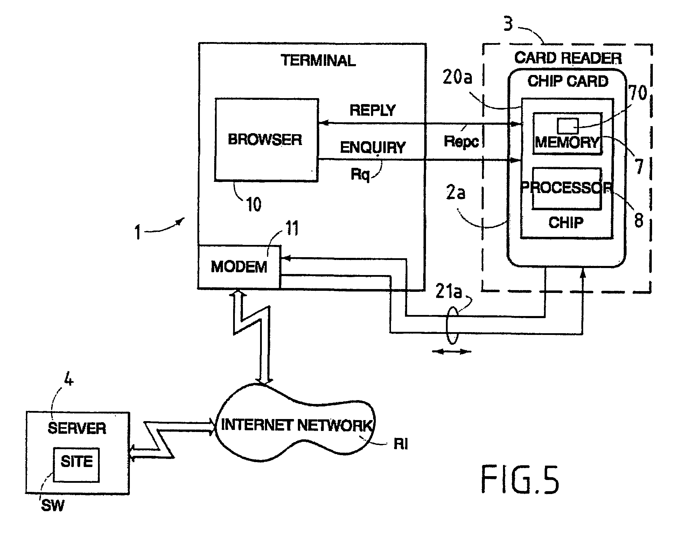

A third practical form of the procedure according to the invention is now described referring to Figure 5. Elements identical to the preceding figures and figures 3 and 4 in particular, carry the same references in Figure 5 and are not described again unless necessary.

According to this practical form the cookies are stored in chip card 2a, as for the first or preferred practical form, although their management remains under the direct control of browser 10. The browser issues query *Rq* which is sent to chip card 2a via a loop URL (see relation (1) above again) to check for the eventual presence of cookies in chip card 2a, corresponding to the domain addressed in server 4, or server 4 itself if the above-mentioned "*domain*" and "*path*" parameters are absent. As for the first practical mode (Figure 3), the cookies are stored in cache 70 of memory 7. If such cookies exist, they are transmitted to browser 10 by reply *RepC.* Browser 10 can add the cookies to a query sent to server 4 (site *SW*). From this point, exchanges between server 4 and browser 10 can be conducted in a way similar to those described in regard to Figure 3, and not to those explicitly represented in Figure 5.

In more precise terms, chip card 2a can incorporate a protocol of a type similar to that known under the abbreviation "NFS" ("Mount"). This protocol is used to mount a "cookies" directory on chip card 2a.

According to this practical form, cookie management is less flexible than with the preferred practical form (Figure 3), again providing a lesser degree of security. However, no traces of browsing are left in terminal 1. As in the case of the preferred practical form, the cookies are stored on chip card 2a, also making it possible to achieve a high level of correlation between the information contained in these cookies. Likewise, the information remains associated with chip card 2a and/or its owner.

It will be clearly seen from the foregoing that the invention achieves its declared objectives.

Nevertheless, it should also be clearly understood that the invention is not limited solely to the practical form examples explicitly described, in particular in regard to Figures 3 to 5.

## Claims

1. Procedure for management of "cookie" type data files in an IT architecture comprising at least a chip card (2a, 20a) and a host terminal (1) connected to an Internet type network (RI), said drip card (2a, 20a) communicating via said host terminal (1) over said Internet type network (RI) with at least one remote server (4), said terminal (1) comprising means (3) for communicating with said chip card (2a, 20a), said terminal (1) and said chip card (2a, 20a) each incorporating one respective software tool of first and second dedicated software tools (13, 23a), the first and second dedicated software tools (13, 23a) comprising at least one pair of matched software entities, each of said entities having protocol conversion functions and cooperating with the other in such a way as to allow the establishment of bidirectional data exchange sessions between said terminal (1) and said chip carf (2a; 20a), in such a way that the chip card (2a; 20a) provides a client-server function, said terminal (1) also incorporating a browser type software tool (10), and said chip card incorporating a memory (7) and a digital data processing device (8), wherein when said browser (10) sends a query to access a remote server (4) and/or when this server (4) sends a reply to said query, said data transmitted corresponding to said queries and/or replies transists in full or in part via said drip card (2a; 20c), **characterized in that** when said data transmitted corresponding to said queries and/or replies contain cookie type data, transmitted data flow is shunted by the chip card (2a; 20a), said procedure comprising:
- a first transmission step, wherein said transmitted data are received by said chip card (2a, 20a); and
- a second transmission step for transmitting the data received by the chip card (2a, 20a) to said remote server (4) and/or said terminal (1), under the control of said digital data processing devices (8);
said matched software entities being used in a communication step between the remote server (4) and the chip card (2a, 20a), said communication step forming either the first transmission step, or the second transmission step, said communication step using access circuits (11) of the terminal (1) distinct from the browser type software tool (10).

2. Procedure according to claim 1, **characterised by** the fact that said cookie type data received from a remote server (4) are stored in a particular zone (70) of said memory (7) of said chip card (20a).

3. Procedure according to claim 2, **characterised by** the fact that each remote server (4) of the HTTP type, and associated with a URL Internet address, defining a "domain" name in the remote server or this server, when said browser (10) sends a query to a given remote server (4), this query is looped to said chip card (2a, 20a), implementing said client-server functions, in that the content of said given zone (70) of said memory (7) is scanned, under the control of said digital data processing device (8), and in that, if at least one of said "cookie" type data items relates to said server domain, or to said remote server (4), this "cookie" type data item is added selectively to said query, before the query is sent to said remote server (4).

4. Procedure according to claim 2, **characterised by** the fact that each remote server (4) of the HTTP type, and associated with a URL Internet address defining a "domain" name in the remote server or this server (4), when said browser (10) sends a query to a given remote server (4), this query is looped back to said chip card (2a, 20a), implementing said client-server functions, in that the content of said given zone (70) of said memory (7) is scanned, under the control of said digital data processing device (8), and in that, if at least one of said cookie type data items relates to said server domain, or to said remote server (4), this data item is retransmitted to said terminal (1) for selective addition to said query under the control of said browser (10), before the query is transmitted to said remote server (4).

5. Procedure according to claim 1, **characterised by** the fact that, said terminal (1) incorporating memory (7'), said "cookie" type data received from a remote server (4) are stored in a given zone of said terminal memory (7'), and in that when said browser (10) sends a query to a given remote server (4), said query is looped back to said chip card (2a, 20a), implementing said client-server functions, in that, using a "redirection" Internet instruction, generated under the control of said data processing resources (8) of said chip card (2a, 20a), said query is retransmitted to said terminal (1) in such a way that the content of said given zone of said terminal memory is scanned, and in that, if at least one of said "cookie" type data items relates to said server domain, or to said remote server, this data item is selectively added to said query before transmission of the query to said remote server.

6. Procedure according to claim 1, **characterised in that**, the data exchanged between said chip card (2a, 20a) and a remote server (4) incorporating a header, said cookie type data are added to this header, and include at least a "NAME" attribute or the name of said cookie, said attribute being a variable associated with a value defining said cookie name.

7. Procedure according to claim 6, **characterised by** the fact that said cookie type data also include at least one of the following supplementary attributes:
- *"expires"* representing a variable defined by an expiry date for the validity of said cookie;
- *"domain"* representing a variable giving the name of a validity domain for the cookie associated with a domain name in a remote server (4);
- *"path"* representing a variable defining a path, associated with the cookie, to a remote server (4); and/or
- "secure" representing a variable indicating whether the cookie is to be transmitted in a secure mode to a remote server (4), using an HTTPS secure Internet transport protocol.

8. Chip card (2a, 20a) communicating, via a host terminal (1) connected to an Internet type network (RI), with at least one remote server (4), said terminal (1) comprising means (3) for communicating with said chip card (2a, 20a), said terminal (1) and said chip card (2a, 20a) each incorporating one respective software tool of first and second specific software tools (13, 23a), the first and second dedicated software tools (13, 23a) comprising at least one pair of matched software entities having protocol conversion functions, each of said entities cooperating with the other in such a way as to establish a bidirectional data exchange session between said terminal (1) and said chip card (2a, 20a), in such a way as to provide a client-server function for said chip card (2a, 20a), said terminal (1) also incorporating a browser type software tool (10), wherein a remote server (4) can, in reply to a query for access to this server (4) from said browser (10), generate and transmit to said terminal (1) data, said data transitting in full or part via said chip card (2a; 20a), **characterized in that** each of said matched software entities being arranged to enable:
- when said data transmitted by said remote server (4) contain cookie type data, said data to be shunt by the chip card (2a, 20a), said chip card comprising means for receiving the transmitted data from access circuits (11) of the terminal (1); and
- transmitting data received by the receiving means of the chip card (2a, 20a) to said terminal (1);
the chip card (2a, 20a) having a silicon chip (20a) that respectively comprises memories (7, 70) for storing the cookie type data and digital data processing device (8) for checking at least the transmission of said cookie type data from and/or to said browser (10) and from and/or to a remote server (4).

9. Chip card according to claim 8, **characterised by** the fact that said digital data processing device (8), following a query from said browser (10) for access to a given remote server (4), scans said memories (7, 70) in such a way as to detect the presence of at least one cookie type data item, and to transmit this item to said browser (10) and/or add the data item to said query before transmission to said remote server (4).

## Patentansprüche

1. Verfahren zur Verwaltung von Dateien vom Typ "Cookies" in einer zumindest eine Chip-Karte (2a, 20a) sowie ein mit einem Netzwerk vom Typ Internet (21) verbundenes Host-Terminal (1) umfassenden EDV-Architektur, wobei besagte Chip-Karte (2a, 20a) via besagtes Host-Terminal (1) über besagtes Netzwerk vom Typ Internet (R1) mit zumindest einem entfernten Server (4) kommuniziert, wobei besagtes Terminal (1) Mittel (3) zur Kommunikation mit besagter Chip-Karte (2a, 20a) umfasst, wobei besagtes Terminal (1) und besagte Chip-Karte (2a, 20a) je ein Software-Werkzeug der ersten und zweiten Spezial-Software-Werkzeuge (13, 23a) aufweisen, wobei das erste und zweite Spezial-Software-Werkzeug (13, 23a) zumindest ein Paar aufeinander abgestimmter Software-Einheiten umfassen, wobei jede der besagten Einheiten Funktionen zur Protokollumsetzung wahrnimmt und mit der anderen Einheit so zusammenarbeitet, dass die Durchführung von Datenaustauschsitzungen in beiden Richtungen zwischen besagtem Terminal (1) und besagter Chip-Karte (2a, 20a) in einer Weise ermöglicht wird, dass für besagte Chip-Karte (2a, 20a) eine Client-Server-Funktion bereitgestellt wird, wobei besagtes Terminal (1) auch ein Software-Werkzeug vom Typ Browser (10) aufweist und besagte Chip-Karte mit einem Speicher (7) und einer digitalen Datenverarbeitungsvorrichtung (8) versehen ist, wobei, wenn besagter Browser (10) eine Anfrage zum Zugriff auf den entfernten Server (4) sendet und/oder wenn dieser Server (4) eine Antwort auf besagte Anfrage übermittelt, die besagten auf besagte Anfragen und/oder Antworten übertragenen Daten ganz oder teilweise über besagte Chip-Karte (2a, 20a) geleitet werden, **dadurch gekennzeichnet, dass** der übermittelte Datenfluss parallel über die Chip-Karte (2a, 20a) geleitet wird, sobald die auf besagte Anfragen und/oder Antworten übertragenen Daten Daten vom Typ Cookie enthalten, wobei das besagte Verfahren folgende Schritte umfasst:
- einen ersten Übertragungsschritt, in dem besagte übertragene Daten von besagter Chip-Karte (2a, 20a) empfangen werden, und
- einen zweiten Schritt zur Übertragung der von besagter Chip-Karte (2a, 20a) empfangenen Daten zu besagtem entferntem Server (4) und/oder besagtem Terminal (1) unter der Kontrolle besagter digitaler Datenverarbeitungsvorrichtungen (8);
wobei besagte aufeinander abgestimmte Software-Einheiten in einem Kommunikationsschritt zwischen dem entfernten Server (4) und der Chip-Karte (2a; 20a) eingesetzt werden, wobei besagter Kommunikationsschritt entweder den ersten Übertragungsschritt oder den zweiten Übertragungsschritt bildet, wobei besagter Kommunikationsschritt Zugangsschaltungen (11) des Terminals (1) nutzt, die sich vom Software-Werkzeug vom Typ Browser (10) unterscheiden.

2. Verfahren nach Anspruch 1, **dadurch gekennzeichnet, dass** besagte von einem entfernten Server (4) empfangene Daten vom Typ Cookie in einem besonderen Bereich (70) des besagten Speichers (7) der besagten Chip-Karte (20a) gespeichert werden.

3. Verfahren nach Anspruch 2, **dadurch gekennzeichnet, dass**, da jeder entfernte Server (4) vom Typ HTTP in Verbindung mit einer URL-Internetadresse einen "Domäne"-Namen in dem entfernten Server oder diesem Server definiert, wenn besagter Browser (10) eine Anfrage an einen bestimmten entfernten Server (4) sendet, diese Anfrage zu besagter Chip-Karte (2a, 20a), die besagte Client-Server-Funktionen wahrnimmt, zurückgeschleift wird, wobei der Inhalt des besagten bestimmten Bereiches (70) des besagten Speichers (7) unter der Kontrolle der besagten digitalen Datenverarbeitungsvorrichtung (8) abgesucht wird, und wobei, falls sich zumindest eines der besagten Datenelemente vom Typ "Cookie" auf besagte Server-Domäne oder auf besagten entfernten Server (4) bezieht, dieses Datenelement vom Typ "Cookie" selektiv zu der besagten Anfrage hinzugefügt wird, bevor die Anfrage zu besagtem entferntem Server (4) gesendet wird.

4. Verfahren nach Anspruch 2, **dadurch gekennzeichnet, dass**, da jeder entfernte Server (4) vom Typ HTTP in Verbindung mit einer URL-Internetadresse einen "Domäne"-Namen in dem entfernten Server oder diesem Server definiert, wenn besagter Browser (10) eine Anfrage an einen bestimmten entfernten Server (4) sendet, diese Anfrage zu besagter Chip-Karte (2a, 20a), die besagte Client-Server-Funktionen wahrnimmt, zurückgeschleift wird, wobei der Inhalt des besagten bestimmten Bereiches (70) des besagten Speichers (7) unter der Kontrolle der besagten digitalen Datenverarbeitungsvorrichtung (8) abgesucht wird, und wobei, falls sich zumindest eines der besagten Datenelemente vom Typ "Cookie" auf besagte Server-Domäne oder auf besagten entfernten Server (4) bezieht, dieses Datenelement vom Typ "Cookie" unter der Kontrolle des besagten Browsers (10) zu besagtem Terminal (1) zur selektiven Hinzufügung zu besagter Anfrage weitergeleitet wird, bevor die Anfrage zu besagtem entferntem Server (4) gesendet wird.

5. Verfahren nach Anspruch 1, **dadurch gekennzeichnet, dass**, da besagtes Terminal (1) einen Speicher (7') besitzt, besagte von einem entfernten Server (4) empfangene Daten vom Typ "Cookie" in einem bestimmten Bereich des besagten Terminalspeichers (7') hinterlegt werden, und dass, wenn besagter Browser (10) eine Anfrage an einen bestimmten entfernten Server (4) sendet, diese Anfrage zu besagter Chip-Karte (2a, 20a), die besagte Client-Server-Funktionen wahrnimmt, zurückgeschleift wird, wobei mit Hilfe einer unter Kontrolle der besagten Datenverarbeitungsvorrichtung (8) der besagten Chip-Karte (2a, 20a) erzeugten "Umleitungs"-Internetanweisung besagte Anfrage an besagtes Terminal (1) so weitergeleitet wird, dass, falls sich zumindest eines der besagten Datenelemente vom Typ "Cookie" auf besagte Server-Domäne oder auf besagten entfernten Server bezieht, dieses Datenelement vor der Weiterleitung der Anfrage zu besagtem entferntem Server selektiv zu besagter Anfrage hinzugefügt wird.

6. Verfahren nach Anspruch 1, **dadurch gekennzeichnet, dass** die zwischen besagter Chip-Karte (2a, 20a) und einem entfernten Server (4) ausgetauschten Daten einen Kopfteil aufweisen, wobei besagte Daten vom Typ "Cookie" zu diesem Kopfteil hinzugefügt werden und zumindest ein "NAMENS"-Merkmal oder den Namen besagter Cookies umfassen, wobei besagtes Merkmal eine mit einem Wert zur Festlegung des besagten Cookie-Namens verbundene Variable ist.

7. Verfahren nach Anspruch 6, **dadurch gekennzeichnet, dass** besagte Daten vom Typ Cookie auch zumindest eines der nachfolgenden zusätzlichen Merkmale einschliessen :
- *"expires",* stellt eine Variable dar, die durch ein Ablaufdatum im Hinblick auf die Gültigkeit des besagten Cookies bestimmt wird.
- "*domain*"stellt eine Variable dar, welche den Namen eines Gültigkeitsbereiches für den Cookie verbunden mit einem Domäne-Namen in einem entfernten Server (4) angibt;
- *"path"* stellt eine Variable dar, welche einen Pfad, verbunden mit dem Cookie, zu einem entfernten Server (4) festlegt und/oder ;
- *"secure"* stellt eine Variable dar, welche angibt, ob der Cookie in einem gesicherten Modus mit Hilfe eines gesicherten HTTPS-Internettransportprotokolls zu einem entfernten Server (4) übertragen werden soll.

8. Chip-Karte (2a, 20a), die über ein mit einem Netzwerk vom Typ Internet (RI) verbundendes Host-Terminal (1) mit zumindest einem entfernten Server (4), kommuniziert, wobei besagtes Terminal (1) Mittel (3) zur Kommunikation mit besagter Chip-Karte (2a, 20a) umfasst, wobei besagtes Terminal (1) und besagte Chip-Karte (2a, 20a) je ein Software-Werkzeug des ersten und zweiten Spezial-Software-Werkzeuges (13, 23a) aufweisen, wobei das erste und zweite Spezial-Software-Werkzeug (13, 23a) zumindest ein Paar aufeinander abgestimmter Software-Einheiten umfassen, wobei jede der besagten Einheiten Funktionen zur Protokollumsetzung wahrnimmt und mit der anderen Einheit so zusammenarbeitet, dass die Durchführung von Datenaustauschsitzungen in beiden Richtungen zwischen besagtem Terminal (1) und besagter Chip-Karte (2a, 20a) in einer Weise ermöglicht wird, dass für besagte Chip-Karte (2a, 20a) eine Client-Server-Funktion bereitgestellt wird, wobei besagtes Terminal (1) auch ein Software-Werkzeug vom Typ Browser (10) aufweist, in dem ein entfernter Server (4) in Antwort auf eine Anfrage zum Zugriff auf diesen Server (4) von besagtem Browser (10) Daten erzeugen und zu besagtem Terminal senden kann, wobei besagte Daten ganz oder teilweise über besagte Chip-Karte (2a, 20a) geleitet werden, **dadurch gekennzeichnet, dass** jede der besagten aufeinander abgestimmten Software-Einheiten so ausgelegt ist, dass :
- wenn besagte vom entfernten Server (4) übermittelteten Daten Daten vom Typ Cookie enthalten, besagte Daten über die Chip-Karte (2a,20a) geleitet werden, wobei besagte Chip-Karte Mittel zum Empfang der von den Zugangsschaltungen (11) des Terminals (1) übermittelteten Daten aufweist; und
- die von den Empfangsmitteln der Chip-Karte (2a, 20a) empfangenen Daten zu besagtem Terminal (1) übertragen werden;
wobei die Chip-Karte (2a, 20a) ein Silizium-Chip (20a) aufweist, welches Speicher (7, 70) zum Speichern der Daten vom Typ Cookie, sowie eine digitale Datenverarbeitungsvorrichtung (8) umfasst, mit deren Hilfe zumindest die Übertragung besagter Daten vom Typ Cookie von und/oder zu besagtem Browser (10) und von und/oder zu einem entfernten Server (4) überprüft werden kann.

9. Chip-Karte nach Anspruch 8, **dadurch gekennzeichnet, dass** besagte digitale Datenverarbeitungsvorrichtung (8) im Anschluss an eine Anfrage von besagtem Browser (10) zum Zugriff auf einen bestimmten entfernten Server (4) besagte Speicher (7, 70) so absucht, dass das Vorhandensein zumindest eines Datenelementes vom Typ Cookie festgestellt und dieses Datenelement zu besagtem Browser (10) weitergeleitet und/oder dieses Datenelement vor der Weiterleitung an den besagten entfernten Server (4) zu besagter Anfrage hinzufügt werden kann.

## Revendications

1. Procédure de gestion de fichiers de données de type "cookie" dans une architecture informatique comprenant au moins une carte à puce (2a, 20a) et un terminal hôte (1) connecté à un réseau de type Internet (R1), ladite carte à puce (2a, 20a) communiquant via ledit terminal hôte (1) sur ledit réseau de type Internet (R1) avec au moins un serveur distant (4), ledit terminal (1) comprenant des moyens (3) qui permettent de communiquer avec ladite carte à puce (2a, 20a), ledit terminal (1) et ladite carte à puce (2a, 20a) incorporant chacun un outil logiciel respectif de premier et second outils logiciels dédiés (13, 23a), les premier et second outils logiciels dédiés (13, 23a) comprenant au moins une paire d'entités logicielles appariées, chacune desdites entités ayant des fonctions de conversion de protocole et coopérant avec l'autre de façon à permettre l'établissement de sessions d'échanges de données bidirectionnelles entre ledit terminal (1) et ladite carte à puce (2a, 20a) de façon telle que la carte à puce (2a, 20a) fournit une fonction client-serveur, ledit terminal (1) incorporant aussi un outil logiciel de type navigateur (10), et ladite carte à puce incorporant une mémoire (7) et un dispositif de traitement des données numériques (8), où lorsque ledit navigateur (10) émet une requête d'accès à un serveur distant (4) et/ou lorsque ce serveur (4) émet une réponse à ladite requête, lesdites données transmises correspondant aux dites requêtes et/ou réponses transitent en tout ou partie via ladite carte à puce (2, 20a), **caractérisé en ce que**, lorsque lesdites données transmises correspondant aux dites requêtes et/ou réponses contiennent des données de type cookie, le flux de données transmises est dérivé par la carte à puce (2, 20a), ladite procédure comprenant :
- une première étape de transmission, dans laquelle lesdites données transmises sont reçues par ladite carte à puce (2, 20a) ; et
- une seconde étape de transmission permettant de transmettre les données reçues par la carte à puce (2, 20a) vers ledit serveur distant (4) et/ou ledit terminal (1) sous le contrôle desdits dispositifs de traitement des données numériques (8) ;
lesdites entités logicielles appariées étant utilisées dans une étape de communication entre le serveur distant (4) et la carte à puce (2, 20a), ladite étape de communication formant soit la première étape de transmission, soit la seconde étape de transmission, ladite étape de communication utilisant des circuits d'accès (11) du terminal (1) distincts de l'outil logiciel de type navigateur (10).

2. Procédure selon la revendication 1, **caractérisée par le fait que** lesdites données de type cookie reçues par un serveur distant (4) sont enregistrées dans une zone particulière (70) de ladite mémoire (7) de ladite carte à puce (20a).

3. Procédure selon la revendication 2, **caractérisée par le fait que**, chaque serveur distant (4) de type http et associé à une adresse Internet URL définissant un nom de "domaine" dans le serveur distant ou ce serveur, lorsque ledit navigateur (10) émet une requête vers un serveur distant donné (4), cette requête est bouclée vers ladite carte à puce (2, 20a), implémentant lesdites fonctions client-serveur, en ce que le contenu de ladite zone donnée (70) de ladite mémoire (7) est analysé, sous le contrôle dudit dispositif de traitement des données numériques (8), et en ce que, si au moins un desdits éléments de données de type "cookie" se rapporte audit domaine de serveur, ou audit serveur distant (4), cet élément de données de type "cookie" est ajouté sélectivement à ladite requête, avant que la requête soit émise vers ledit serveur distant (4).

4. Procédure selon la revendication 2, **caractérisée par le fait que**, chaque serveur distant (4) de type http et associé à une adresse Internet URL définissant un nom de "domaine" dans le serveur distant ou ce serveur (4), lorsque ledit navigateur (10) émet une requête vers un serveur distant donné (4), cette requête est bouclée vers ladite carte à puce (2, 20a) implémentant lesdites fonctions client-serveur, en ce que le contenu de ladite zone donnée (70) de ladite mémoire (7) est analysé, sous le contrôle dudit dispositif de traitement des données numériques (8), et en ce que, si au moins un desdits éléments de données de type "cookie" se rapporte audit domaine de serveur, ou audit serveur distant (4), cet élément de données est re-transmis vers ledit terminal (1) pour une addition sélective à ladite requête sous le contrôle dudit navigateur (10) avant que la requête soit transmise vers ledit serveur distant (4).

5. Procédure selon la revendication 1, **caractérisée par le fait que**, ledit terminal (1) incorporant une mémoire (7'), lesdites données de type "cookie" reçues depuis un serveur distant (4) sont enregistrées dans une zone donnée de ladite mémoire (7') du terminal et en ce que, lorsque ledit navigateur (10) émet une requête vers un serveur distant (4) donné, ladite requête est bouclée vers ladite carte à puce (2a, 20a), implémentant lesdites fonctions client-serveur, en ce que, en utilisant une instruction Internet de "redirection", générée sous le contrôle desdites ressources de traitement des données (8) de ladite carte à puce (2a, 20a), ladite requête est retransmise vers ledit terminal (1) de façon telle que le contenu de ladite zone donnée de ladite mémoire de terminal est analysé, et en ce que, si au moins un desdits éléments de données de type "cookie" se rapporte audit domaine de serveur, ou audit serveur distant, cet élément de données est ajouté sélectivement à ladite requête avant la transmission de ladite requête vers ledit serveur distant.

6. Procédure selon la revendication 1, **caractérisée en ce que**, les données échangées entre ladite carte à puce (2a, 20a) et un serveur distant (4) incorporant un en-tête, lesdites données de type cookie sont ajoutées à cet en-tête et comprennent au moins un attribut "NOM" ou le nom dudit cookie, ledit attribut étant une variable associée à une valeur définissant ledit nom de cookie.

7. Procédure selon la revendication 6, **caractérisée par le fait que** lesdites données de type cookie comprennent au moins un des attributs supplémentaires suivants :
- "expires", représentant une variable définie par une date d'expiration de la validité dudit cookie ;
- "domain", représentant une variable qui donne le nom d'un domaine de validité pour le cookie associé à un nom de domaine dans un serveur distant (4) ;
- "path", représentant une variable qui définit un chemin, associé au cookie, vers un serveur distant (4) ; et/ou
- "secure", représentant une variable qui indique si le cookie doit être transmis en mode sécurisé vers un serveur distant (4), en utilisant un protocole de transport Internet sécurisé HTTPS.

8. Carte à puce (2a, 20a) communiquant, via un terminal hôte (1) connecté à un réseau de type Internet (RI), avec au moins un serveur distant (4), ledit terminal (1) comportant des moyens (3) pour communiquer avec ladite carte à puce (2a, 20a), ledit terminal (1) et ladite carte à puce (2a, 20a) incorporant chacun un outil logiciel respectif de premier et second outils logiciels spécifiques (13, 23a), les premier et second outils logiciels dédiés (13, 23a) comprenant au moins une paire d'entités logicielles appariées ayant des fonctions de conversion de protocole, chacune desdites entités coopérant avec l'autre de façon à établir une session d'échange de données bidirectionnel entre ledit terminal (1) et ladite carte à puce (2a, 20a), de façon à fournir une fonction client-serveur pour ladite carte à puce (2a, 20a), ledit terminal (1) incorporant aussi un outil logiciel de type navigateur (10), où un serveur distant (4) peut, en réponse à une requête d'accès à ce serveur (4) depuis ledit navigateur (10), générer et transmettre vers ledit terminal des données, lesdites données transitant en tout ou partie via ladite carte à puce (2a, 20a), **caractérisée en ce que** chacune desdites entités logicielles appariées est adaptée pour permettre :
- lorsque lesdites données transmises par ledit serveur distant (4) contiennent des données de type cookie, que lesdites données soient dérivées par la carte à puce (2a, 20a), ladite carte comprenant des moyens pour recevoir les données transmises depuis des circuits d'accès (11) du terminal (1) ; et
- la transmission de données reçues par les moyens de réception de la carte à puce (2a, 20a) vers ledit terminal (1) ; la carte à puce (2a, 20a) ayant une puce en silicium (20a) qui comprend respectivement des mémoires (7, 70) permettant d'enregistrer les données de type cookie, et un dispositif de traitement des données numériques (8) permettant de contrôler au moins la transmission desdites données de type "cookie" depuis et/ou vers ledit navigateur (10) et depuis et/ou vers un serveur distant (4).

9. Carte à puce selon la revendication 8, **caractérisée par le fait que** ledit dispositif de traitement des données numériques (8), suite à une requête dudit navigateur (10) pour accéder à un serveur distant donné (4), analyse lesdites mémoires (7, 70) de façon à détecter la présence d'au moins un élément de données de type cookie, et à transmettre cet élément audit navigateur (10) et/ou à ajouter l'élément de données à ladite requête avant la transmission vers ledit serveur distant (4).
